# EUROPEAN PATENT APPLICATION

(11) **EP 2 648 093 A1**
(43) Date of publication of application: **09.10.2013**
(21) Application number: 13161251.7
(22) Date of filing: 27.03.2013
(51) Int. Cl.: G06F 9/44, G06F 9/46, G06F 9/48

(54) **Method for bookmark function applicable in messenger application and electronic apparatus thereof**

(30) Priority: 03.04.2012 KR 20120034423
(71) Applicant: Samsung Electronics Co., Ltd, Gyeonggi-do 443-742 (KR)
(72) Inventor: Lee, Ki-Man, Gyeonggi-do (KR)
(74) Representative: Jenkins, Richard Gavin

(57) **Abstract**

A method and apparatus for a bookmark function is applicable in a messenger application. The method includes checking whether other application is selected during the use of a messenger application, storing a predetermined dialog location in the messenger application when the other application is selected, backgrounding the messenger application and foregrounding the other application, and returning to the predetermined dialog location when the messenger application is foregrounded.

## Description

### TECHNICAL FIELD OF THE INVENTION

The present disclosure relates generally to a bookmark function. In particular, the present disclosure relates to a method for providing an improved bookmark function in an electronic device and the electronic device employing the method.

### BACKGROUND OF THE INVENTION

Generally, in a messenger providing a chatting service, when new messages are present, the number of new messages and a last dialog are displayed at a specific location of a messenger chat window, and a user tracks a last dialog recognized after entry into a chat room and checks the dialog contents after the last dialog.

However, when dialog contents are not closely observed in a group chat, a user should trace back to last-perceived dialog contents in order to check passed dialog contents.

### SUMMARY OF THE INVENTION

To address the above-discussed deficiencies of the prior art, it is a primary object to provide a method and apparatus for a bookmark function applicable in a messenger application.

Another object of the present disclosure is to provide a method and apparatus for enabling a user to easily access a location clicked or a section progressed last by the user in a message thread of a messenger application.

Another object of the present disclosure is to provide a method and apparatus for enabling a user to easily access a specific dialog time point in a message thread of a messenger application.

Another object of the present disclosure is to provide a method and apparatus for enabling a user to easily access a specific dialog time point in a messenger application when the user misses dialog contents due to frequent re-entry into a chat room, thereby reducing a load on the user to search for the missed dialog contents one by one.

According to an aspect of the present disclosure, a method for a bookmark function applicable in a messenger application includes: checking whether other application is selected during the use of a messenger application; storing a predetermined dialog location in the messenger application when the other application is selected; backgrounding the messenger application and foregrounding the other application; and returning to the predetermined dialog location when the messenger application is foregrounded.

According to another aspect of the present disclosure, a method for a bookmark function applicable in a messenger application includes: checking whether there is an input of a predetermined dialog location during the use of a messenger application; storing the predetermined dialog location when there is the input of the predetermined dialog location; checking whether there is a return input; and returning to the predetermined dialog location when there is the return input.

According to another aspect of the present disclosure, an apparatus for a bookmark function applicable in a messenger application includes: at least one processor; a memory; and at least one module stored in the memory and configured to be executable by the processor, wherein the module checks whether other application is selected during the use of a messenger application, stores a predetermined dialog location in the messenger application when the other application is selected, backgrounds the messenger application and foregrounds the other application, and returns to the predetermined dialog location when the messenger application is foregrounded.

According to another aspect of the present disclosure, an apparatus for a bookmark function applicable in a messenger application includes: at least one processor; a memory; and at least one module stored in the memory and configured to be executable by the processor, wherein the module checks whether there is an input of a predetermined dialog location during the use of a messenger application, stores the predetermined dialog location when there is the input of the predetermined dialog location, checks whether there is a return input, and returns to the predetermined dialog location when there is the return input.

According to another aspect of the present disclosure, an apparatus for a bookmark function applicable in a messenger application includes: a unit for checking whether other application is selected during the use of a messenger application; a unit for storing a predetermined dialog location in the messenger application when the other application is selected; a unit for backgrounding the messenger application and foregrounding the other application; and a unit for returning to the predetermined dialog location when the messenger application is foregrounded.

According to another aspect of the present disclosure, an apparatus for a bookmark function applicable in a messenger application includes: a unit for checking whether there is an input of a predetermined dialog location during the use of a messenger application; a unit for storing the predetermined dialog location when there is the input of the predetermined dialog location; a unit for checking whether there is a return input; and a unit for returning to the predetermined dialog location when there is the return input.

According to another aspect of the present disclosure, a computer-readable recording medium stores one or more programs including instructions for causing, when executed in an electronic apparatus, the electronic apparatus to perform: checking whether other application is selected during the use of a messenger application; storing a predetermined dialog location in the messenger application when the other application is selected; backgrounding the messenger application and foregrounding the other application; and returning to the predetermined dialog location when the messenger application is foregrounded.

According to another aspect of the present disclosure, a computer-readable recording medium stores one or more programs including instructions for causing, when executed in an electronic apparatus, the electronic apparatus to perform: checking whether there is an input of a predetermined dialog location during the use of a messenger application; storing the predetermined dialog location when there is the input of the predetermined dialog location; checking whether there is a return input; and returning to the predetermined dialog location when there is the return input.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGS. 1A-D illustrate a process for recording a dialog location according to an exemplary embodiment of the present disclosure;

FIG. 2A illustrates another process for recording a dialog location according to an exemplary embodiment of the present disclosure;

FIG. 2B illustrates another process for recording a dialog location according to an exemplary embodiment of the present disclosure;

FIG. 3 illustrates a block diagram of an electronic device according to an exemplary embodiment of the present disclosure;

FIG. 4 illustrates a flowchart for a process for storing a last dialog location while using a messenger application according to an exemplary embodiment of the present disclosure;

FIG. 5 illustrates a flowchart for a process for storing a clicked dialog location while using a messenger application according to an exemplary embodiment of the present disclosure;

FIG. 6 illustrates a flowchart for a process for automatically moving to a last dialog location when returning to a messenger application according to an exemplary embodiment of the present disclosure; and

FIG. 7 illustrates a flowchart for a process for automatically moving to a last dialog location when returning to a messenger application according to an exemplary embodiment of the present disclosure.

### DETAILED DESCRIPTION OF THE INVENTION

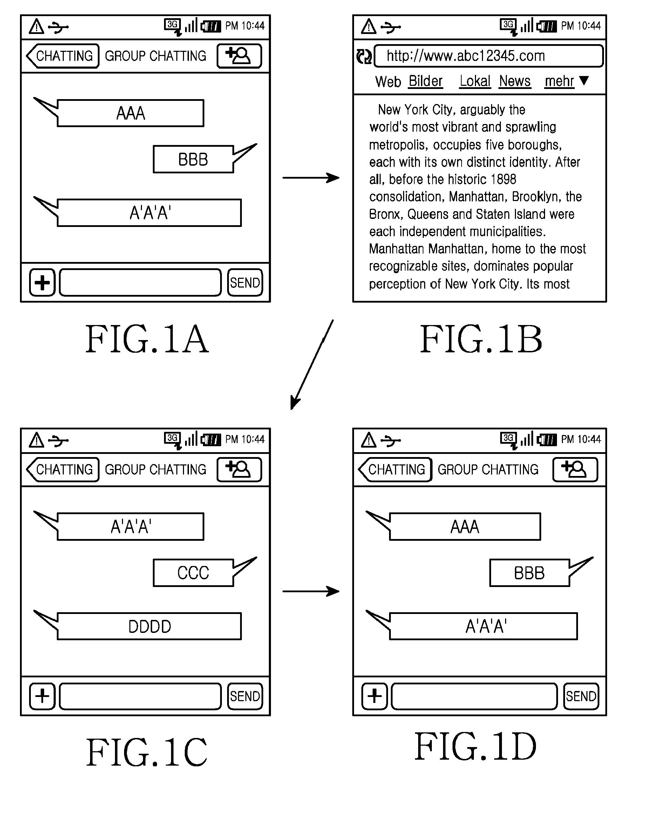

FIGURES 1A through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Exemplary embodiments of the present invention will be described herein below with reference to the accompanying drawings. In the following description, detailed descriptions of well-known functions or configurations will be omitted since they would unnecessarily obscure the subject matters of the present invention. Also, the terms used herein are defined according to the functions of the present invention. Thus, the terms may vary depending on users' or operators' intentions or practices. Therefore, the terms used herein should be understood based on the descriptions made herein.

Hereinafter, a description will be given of a method and apparatus for a bookmark function applicable in a messenger application according to the present disclosure.

FIGS. 1A-D illustrate a process for recording a dialog location according to an exemplary embodiment of the present disclosure.

Referring to FIGS. 1A-D, while progressing a dialog in a messenger application (as illustrated in FIG. 1A), a user backgrounds the messenger application and executes other application (as illustrated in FIG. 1B). Thereafter, when the user reenters the messenger application, a dialog of the messenger application has already progressed after the messenger application was backgrounded (as illustrated in FIG. 1C).

In this case, the present disclosure automatically moves to a display time point of in the messenger application backgrounded by the user, thus enabling the user to easily check dialog contents (as illustrated in FIG. 1D).

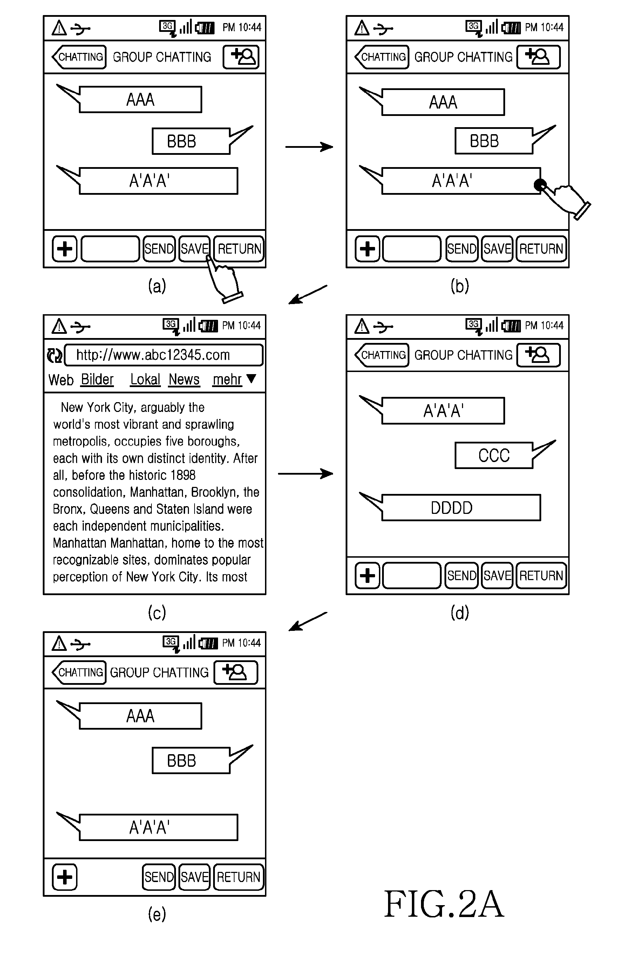

FIG. 2A illustrates another process for recording a dialog location according to an exemplary embodiment of the present disclosure.

Referring to FIG. 2A, while progressing a dialog in the messenger application, the user presses a save button (step a) and clicks a desired dialog location (step b). In this case, the messenger application stores the clicked dialog location.

Thereafter, when the user backgrounds the messenger application and executes other application (step c) and then reenters the messenger application, a dialog of the messenger application has already progressed after the messenger application was backgrounded (step d).

In this case, the present disclosure automatically moves to a display time point of in the messenger application backgrounded by the user, thus enabling the user to easily check dialog contents (step e).

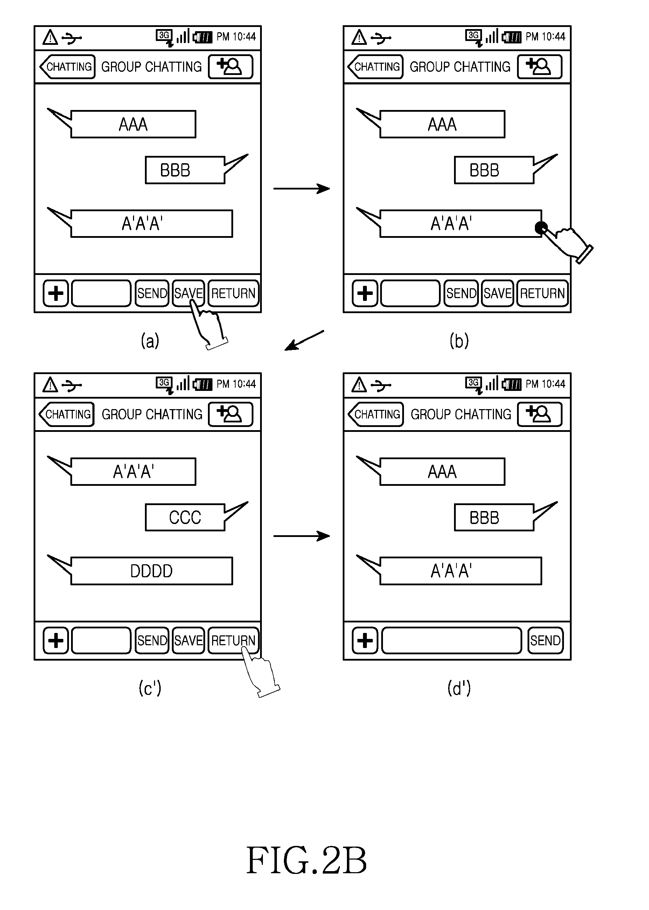

FIG. 2B illustrates another process for recording a dialog location according to an exemplary embodiment of the present disclosure.

Referring to FIG. 2B, while progressing a dialog in the messenger application, the user presses the save button (step a) and clicks a desired dialog location (step b). In this case, the messenger application stores the clicked dialog location.

Thereafter, when the user presses a return button during a dialog in the messenger application (step c'), the present disclosure automatically moves to a designated time point in the messenger application, thus enabling the user to easily check dialog contents (step d').

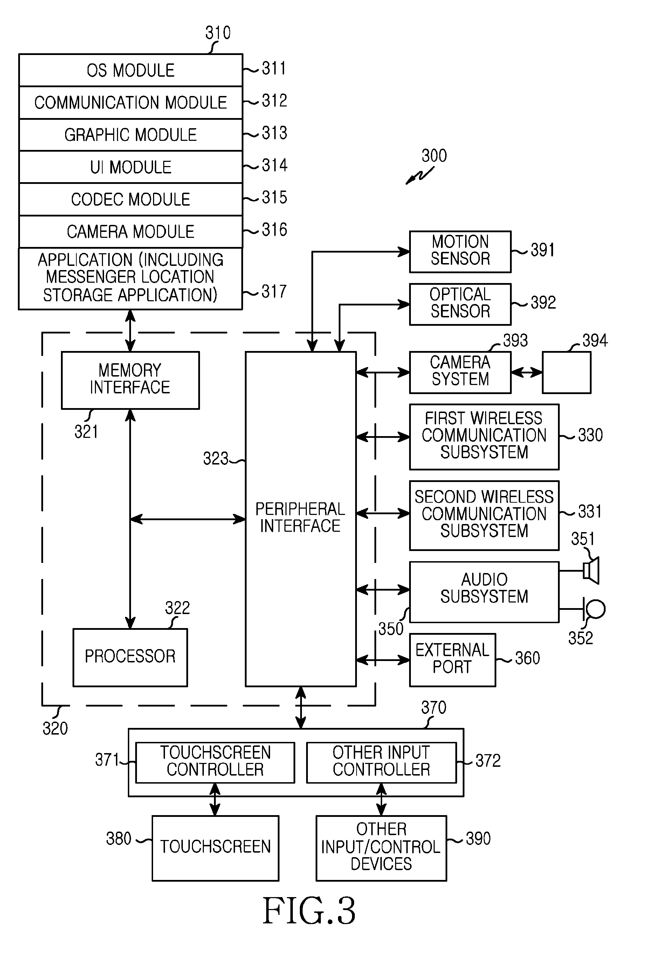

FIG. 3 illustrates a block diagram of an electronic device 300 according to an exemplary embodiment of the present disclosure.

Referring to FIG. 3, the electronic device 300 may be a portable electronic device, and examples of which may include portable terminals, mobile phones, mobile pads, media players, tablet computers, handheld computers, personal digital assistants (PDAs), and the like. Also, the electronic apparatus 300 may be any portable electronic device including a combination of two or more functions of the above-mentioned devices.

The electronic device 300 includes a memory unit 310, a processor unit 320, a first wireless communication subsystem 330, a second wireless communication subsystem 331, an external port 360, an audio subsystem 350, a speaker 351, a microphone 352, an input/output (I/O) subsystem 370, a touchscreen 380, and other input/control devices 390. The memory unit 310 and the external port 360 may be provided in plurality.

The processor unit 320 may include a memory interface 321, at least one processor 322, and a peripheral interface 323. In some cases, the processor unit 320 will also be referred to as a processor. The memory interface 321 may be separated from the processor 322 and/or the peripheral interface 323, or may be integrated into at least one integrated circuit.

The processor 322 executes various software programs to perform various functions for the electronic apparatus 300, and performs processes and controls for voice communication and data communication. In addition to these general functions, the processor 322 executes a software module (instruction set) stored in the memory unit 310 and performs various functions corresponding to the software module. That is, the processor 322 performs methods of exemplary embodiments of the present disclosure in cooperation with software modules stored in the memory unit 310.

The processor 322 may include at least one data processor, image processor, or codec. The data processor, the image processor, or the codec may be configured separately. Also, the processor 322 may be configured a plurality of processors performing different functions.

The peripheral interface 323 connects various peripheral devices and the I/O subsystem 370 of the electronic apparatus 300 to the processor 322 and the memory unit 310 (through the memory interface 321).

The various elements of the electronic apparatus 300 may be coupled by at least one communication bus (not illustrated) or stream line (not illustrated).

The external port 360 is used to connect the electronic apparatus 300 to other electronic apparatuses directly or indirectly through a network (for example, Internet, intranet, or wireless LAN). The external port 360 may be, for example, a universal serial bus (USB) port or a FireWire port, but is not limited thereto.

A motion sensor 391 and a first optical sensor 392 may be connected to the peripheral interface 323 to perform various functions. For example, the motion sensor 391 and the first optical sensor 392 may be connected to the peripheral interface 323 to detect a motion of the electronic apparatus and detect light from the outside. In addition, other sensors such as a positioning system, a temperature sensor, and a biosensor may be connected to the peripheral interface 323 to perform relevant functions.

A camera system 393 may be connected to a second optical sensor 394 to perform camera functions such as photographing and video clip recording.

The first optical sensor 392 and the second optical sensor 394 may include a charged coupled device (CCD) or a complementary metal-oxide semiconductor (CMOS) device.

A communication function is performed through one or more wireless communication subsystems 330 and 331. The wireless communication subsystems 330 and 331 may include a radio frequency (RF) receiver and transceiver and/or an optical (e.g., infrared) receiver and transceiver. The first wireless communication subsystem 330 and the second wireless communication subsystem 331 may be divided according to communication networks through which the electronic apparatus 300 communicate.

For example, the electronic apparatus 300 may include, but not limited to, communication subsystems operated through a GSM (Global System for Mobile Communication) network, an EDGE (Enhanced Data GSM Environment) network, a CDMA (Code Division Multiple Access) network, a W-CDMA (W-Code Division Multiple Access) network, an LTE (Long Term Evolution) network, an OFDMA (Orthogonal Frequency Division Multiple Access) network, a WiFi (Wireless Fidelity) network, a WiMax network, and/or a Bluetooth network.

However, since the present disclosure includes embodiments where WiFi Direct communication is required through a WiFi Direct network, one of the first wireless communication subsystem 330 and the second wireless communication subsystem 331 may be a WiFi Direct communication subsystem.

The first wireless communication subsystem 330 and the second wireless communication subsystem 331 may be integrated into one wireless communication subsystem.

The audio subsystem 350 is connected to the speaker 351 and the microphone 352 to perform audio stream input/output functions such as voice recognition, voice replication, digital recording, and phone functions.

That is, the audio subsystem 350 communicates with the user through the speaker 351 and the microphone 352. The audio subsystem 350 receives a data stream through the peripheral interface 323 of the processor unit 320 and converts the received data stream into an electric stream. The electric stream is transmitted to the speaker 351. The speaker 351 converts the electric stream into sound waves audible by humans and outputs the same. The microphone 352 converts sound waves received from humans or other sound sources into an electric stream. The audio subsystem 350 receives an electric stream converted from the microphone 352. The audio subsystem 350 converts the received electric stream into an audio data stream and transmits the audio data stream to the peripheral interface 323. The audio subsystem 350 may include an attachable/detachable earphone, a headphone, or a headset.

The I/O subsystem 370 may include a touchscreen controller 371 and/or an other input controller 372. The touchscreen controller 371 may be connected to the touchscreen 380.

For example, the touchscreen 380 and the touchscreen controller 371 may detect a touch, a motion, or a stop thereof by using multi-touch detection technologies including a proximity sensor array or other elements, as well as capacitive, resistive, infrared and surface acoustic wave technologies for determining one or more touch points with the touchscreen 380.

The other input controller 372 may connected to the other input/control devices 390. The other input/control devices 390 may include one or more volume up/down buttons. The buttons may be push buttons, rocker buttons, or the like. The other input/control devices 170 may include a rocker switch, a thumb wheel, a dial, a stick, and/or a pointer device such as a stylus.

The touchscreen 380 provides an I/O interface between the electronic apparatus 300 and the user. That is, the touchscreen 380 transmits a user touch input to the electronic apparatus 300. Also, the touchscreen 380 is a medium that displays an output from the electronic apparatus 300 to the user.

That is, the touchscreen 300 displays a visual output to the user. The visual output may be represented by a text, a graphic, a video, or a combination thereof.

The touchscreen 380 may use various display technologies. For example, the touchscreen 380 may use an LCD (liquid crystal display), an LED (Light Emitting Diode), an LPD (light emitting polymer display), an OLED (Organic Light Emitting Diode), an AMOLED (Active Matrix Organic Light Emitting Diode), or an FLED (Flexible LED).

The memory 310 may be connected to the memory interface 321. The memory unit 310 may include one or more high-speed random-access memories (RAMs) such as magnetic disk storage devices, one more nonvolatile memories, one or more optical storage devices, and/or one or more flash memories (for example, NAND flash memories or NOR flash memories).

The memory unit 310 stores software. Elements of the software include an operation system (OS) module 311, a communication module 312, a graphic module 313, a user interface (UI) module 314, a codec module 315, a cameral module 316, and at least one application module 317.

The application 317 includes a messenger location storage application of the present disclosure. The messenger location storage application performs a function of returning a dialog location to a predetermined location or a last dialog location of a messenger application.

That is, the application 317 may perform the operations of FIGS. 1 and 2. Also, since the module that is an element of the software may be represented as a set of instructions, the module may be referred to as an instruction set. The module may also be referred to as a program. In this specification, one or more modules including instructions for performing various methods of the present disclosure may be stored in the memory unit 310.

The OS module 311 (for example, WINDOWS, LINUX, Darwin, RTXC, UNIX, OS X, or an embedded OS such as VxWorks) includes various software elements for controlling general system operations. For example, general system operation controls include memory control/management, storage hardware (device) control/management, and power control/management. The OS module 311 also performs a function for enabling smooth communication between various hardware elements (devices) and software elements (modules).

The communication module 312 may enable communication with other electronic apparatuses (such as computers, servers, and/or portable terminals) through the wireless communication subsystems 330 and 331 or the external port 360.

The graphic module 313 includes various software elements for providing and displaying graphics on the touchscreen 380. The graphics include texts, web pages, icons, digital images, videos, and animations.

The UI module 314 includes various software elements related to a user interface. Specifically, the UI module 114 includes information about how the state of a user interface changes and/or information about under what condition the state of a user interface changes.

The codec module 315 may include software elements related to video file encoding/decoding. The codec module 315 may include a video stream module such as an MPEG module or an H204 module. Also, the codec module 315 may include various audio file codec modules such as AAA, AMR, and WMA.

The camera module 316 may include camera-related software elements that enable camera-related processes and functions. The application module 317 includes a browser application, an e-mail application, an instant message application, a word processing application, a keyboard emulation application, an address book application, a touch list application, a widget application, a digital right management (DRM) application, a voice recognition application, a voice replication application, a position determining function application, a location-based service (LBS) application, and the like.

The memory unit 310 may further include an additional module (instructions) in addition to the above-described modules. Also, in some cases, the memory unit 110 may not use some of the modules (instructions).

In addition, various functions of the electronic apparatus 300 according to the present disclosure, which have been described above and will be described below, may be implemented by any combination of hardware and/or software including one or more stream processings and/or an application-specific integrated circuit (ASIC).

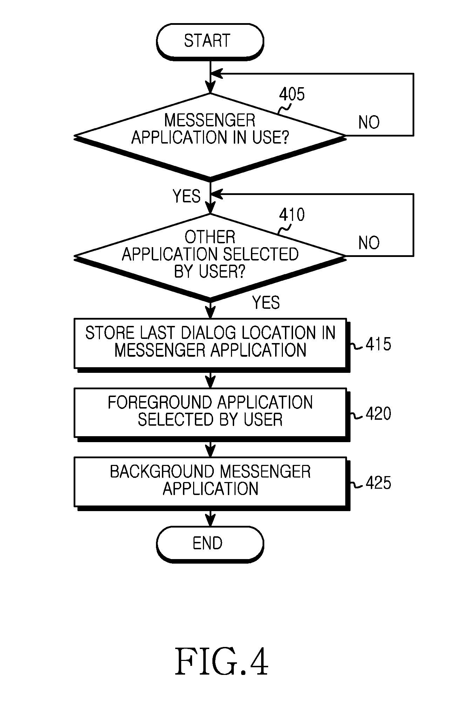

FIG. 4 illustrates a flowchart of a process for storing a last dialog location while using a messenger application according to an exemplary embodiment of the present disclosure.

Referring to FIG. 4, when the user selects other application (for example, web browser) (step 410) while using a messenger application (step 405), the messenger location storage application of the present disclosure stores a last dialog location in the messenger application (step 415). The last dialog location is a location at which a user dialog is last input.

Thereafter, the messenger location storage application foregrounds the application selected by the user (step 420), and backgrounds the messenger application (step 425).

The method described above in relation with FIG. 4 under of the present invention may be provided as one or more instructions in one or more software modules, or computer programs stored in an electronic device including a portable terminal.

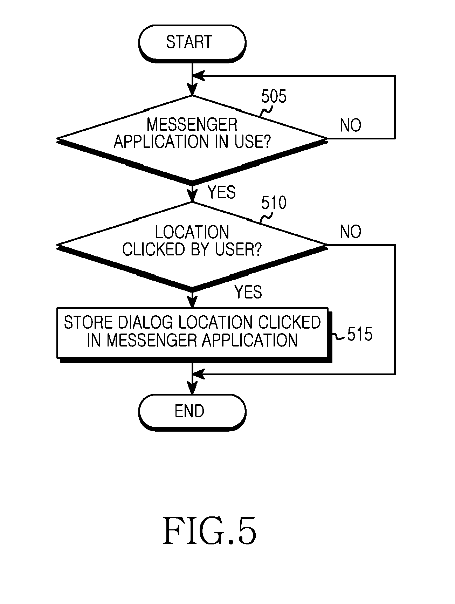

FIG. 5 illustrates a flowchart of a process for storing a clicked dialog location while using a messenger application according to an exemplary embodiment of the present disclosure.

Referring to FIG. 5, when the user clicks a specific location on a chat window of the messenger application (step 510) while using the messenger application (step 505), the messenger location storage application of the present disclosure stores a clicked dialog location in the messenger application (step 515).

The method described above in relation with FIG. 5 under of the present invention may be provided as one or more instructions in one or more software modules, or computer programs stored in an electronic device including a portable terminal.

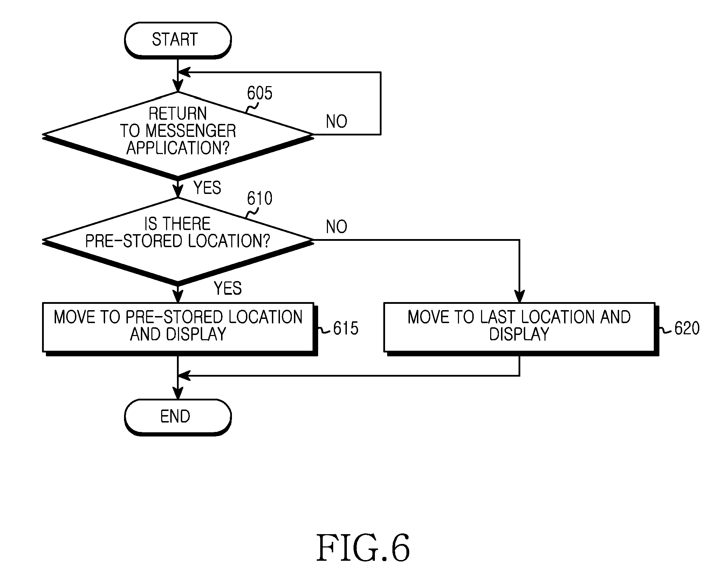

FIG. 6 illustrates a flowchart of a process for automatically moving to a last dialog location when returning to a messenger application according to an exemplary embodiment of the present disclosure.

Referring to FIG. 6, when the user returns to the messenger application while using other application (step 605), the messenger location storage application of the present disclosure checks whether a pre-stored location is present (step 610).

If the pre-stored location is present, the messenger location storage application moves to a dialog time point of the pre-stored location and performs display (step 615). That is, the messenger location storage application returns to a dialog time point of the pre-stored location.

If the pre-stored location is not present, the messenger location storage application moves to a dialog time point of the last location and performs display (step 620). That is, the messenger location storage application returns to a dialog time point of the last location.

The method described above in relation with FIG. 6 under of the present invention may be provided as one or more instructions in one or more software modules, or computer programs stored in an electronic device including a portable terminal

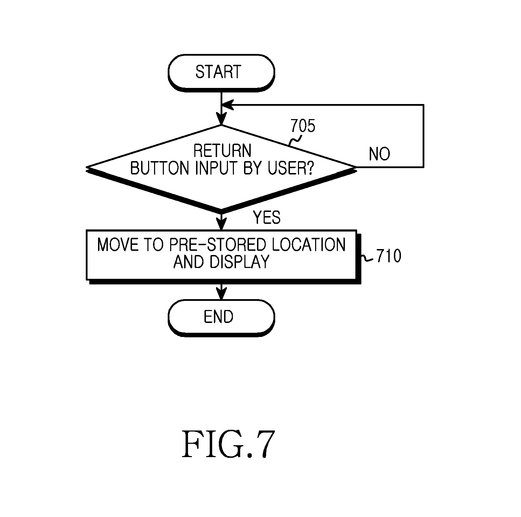

FIG. 7 illustrates a flowchart of a process for automatically moving to a last dialog location when returning to a messenger application according to an exemplary embodiment of the present disclosure.

Referring to FIG. 7, when detecting an input of a return button while the user uses other application (step 705), the messenger location storage application of the present disclosure moves to a dialog time point of the pre-stored location and performs display (step 710). That is, the messenger location storage application returns to a dialog time point of the pre-stored location. If the pre-stored location is not present, the input of the user may be discarded.

The method described above in relation with FIG. 7 under of the present invention may be provided as one or more instructions in one or more software modules, or computer programs stored in an electronic device including a portable terminal.

It will be appreciated that embodiments of the present disclosure according to the claims and description in the specification can be realized in the form of hardware, software or a combination of hardware and software. Any such software may be stored in a non-transient computer readable storage medium. The computer readable storage medium stores one or more programs (software modules), the one or more programs comprising instructions, which when executed by one or more processors in an electronic device, cause the electronic device to perform a method of the present disclosure. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

As described above, the present disclosure enables the user to easily access a specific dialog time point in the messenger application when the user misses dialog contents due to frequent re-entry into a chat room, thereby making it possible to reduce a load on the user to search for the missed dialog contents one by one.

While the invention has been shown and described with reference to certain exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

## Claims

1. A method for a bookmark function applicable in a messenger application, the method comprising:
determining whether another application is selected during the use of a messenger application;
storing a predetermined dialog location in the messenger application when the other application is selected;
placing the messenger application in a background state and placing the other application in a foreground state; and
returning to the predetermined dialog location when the messenger application is placed in the foreground state.

2. The method of claim 1, wherein the predetermined dialog location is a last dialog input location.

3. The method of claim 1, wherein the predetermined dialog location is a clicked location.

4. A method for a bookmark function applicable in a messenger application, comprising:
determining whether there is an input of a predetermined dialog location during the use of a messenger application;
storing the predetermined dialog location in response to the input of the predetermined dialog location;
determining whether a return input is received; and
returning to the predetermined dialog location in response to the return input being received.

5. The method of claim 4, wherein the predetermined dialog location is an input location.

6. The method of claim 4, wherein the predetermined dialog location is a clicked location.

7. An electronic device configured to provide a bookmark function applicable in a messenger application, the electronic device comprising:
a memory configured to store at least one module; and
at least one processor configured to execute one or more instructions of the at least one module to:
determine whether another application is selected during the use of a messenger application;
store a predetermined dialog location in the messenger application when the other application is selected;
place the messenger application in a background state and place the other application in a foreground state; and
return to the predetermined dialog location when the messenger application is placed in the foreground state.

8. An electronic device for configured to provide a bookmark function applicable in a messenger application, the electronic device comprising:
at least one processor;
a memory configured to store at least one module; and
at least one processor configured to execute one or more instructions of the module to:
determine whether there is an input of a predetermined dialog location during the use of a messenger application;
store the predetermined dialog location in response to the input of the predetermined dialog location;
determine whether there a return input is received; and
return to the predetermined dialog location in response to the return input being received.

9. An electronic device configured to provide a bookmark function applicable in a messenger application, the electronic device comprising:
a unit configured to determine whether another application is selected during the use of a messenger application;
a unit configured to store a predetermined chat location in the messenger application when the other application is selected;
a unit configured to place the messenger application in a background state and place the other application in a foreground state; and
a unit configured to return to the predetermined chat location when the messenger application is placed in the foreground state.

10. The electronic device of claim 9 and the electronic device of claim 7, wherein the predetermined dialog location is a last dialog input location.

11. The electronic device of claim 9 and the electronic device of claim 7, wherein the predetermined dialog location is a clicked location.

12. An electronic device for providing a bookmark function applicable in a messenger application, comprising:
a unit configured to determine whether there is an input of a predetermined dialog location during the use of a messenger application;
a unit configured to store the predetermined dialog location in response to the input of the predetermined dialog location;
a unit configured to determine whether there a return input is received; and
a unit configured to return to the predetermined dialog location in response to the return input being received.

13. The electronic device of claim 12 and the electronic device of claim 8, wherein the predetermined dialog location is an input location.

14. The electronic device of claim 12 and the electronic device of claim 8, wherein the predetermined dialog location is a clicked location.
